# EUROPEAN PATENT APPLICATION

(11) **EP 3 965 268 A1**
(43) Date of publication of application: **09.03.2022**
(21) Application number: 20194908.8
(22) Date of filing: 07.09.2020
(51) Int. Cl.: H02K 9/04, H02K 9/06, H02K 11/33, H02K 21/22

(54) **ELECTRIC MOTOR WITH VENTILATED ELECTRONICS HOUSING**

(71) Applicant: HIDRIA d.o.o., 1000 Ljubljana (SI)
(72) Inventor: MILAVEC, Matej, 1370 LOGATEC (SI); LAPANJA, Bojan, 5280 IDRIJA (SI)
(74) Representative: BARRE LAFORGUE

(57) **Abstract**

The invention relates to an electric motor (30) comprising:
- a rotor (1) ;
- a stator (2,3,31) comprising a yoke, named stator yoke (3), accommodating the rotor (1) mounted rotatable relative to the stator (2,3,31) according to an axis of rotation of the rotor (1) superposed to a longitudinal axis (4) of the stator (2,3,31) ;
- an electronics housing (5) mounted axially according to said longitudinal axis (4) and supported by said stator yoke (3) and secured to said stator yoke (3), the electronics housing (5) containing integrated motor electronics (6) to be cooled when the electric motor (30) operates;
characterized in that the electronics housing (5) and said stator yoke (3) are so disposed to form an air path (7) for guiding an air flow (35,36) through the air path (7) and for cooling the integrated motor electronics (6) under operating the electric motor (30), the air path (7) extending:
▪ axially between a free face, named yoke face (15), of said stator yoke (3) and a free face, named housing face (14), of an axial bottom wall (8) of the electronics housing (5) facing said yoke face (15), and in contact with said yoke face (15) and with said housing face (14), and ;
▪ radially between an opening (9) of the air path (7), extending outwards, circumferentially and proximate to the axial bottom wall (8) of the electronics housing (5), and limited inwards by an axial wall (10).

## Description

The invention relates to an electric motor equipped of an electronics housing containing integrated motor electronics for controlling the electric motor, particularly to an electronically commutated (EC) electric motor, with improved ventilation of the electronics housing and cooling of the electronics.

The electric part of an electric motor and the electronic part controlling said electric motor have different thermal loads and different resistance to temperature, notably to high temperature. Thermal load of the electric motor can be notably due to electrical power components, such as for example power module, or due to the motor itself, for example due to the motor windings or to the ball bearings. As a consequence, the power developed by electric motors with integrated electronics, in particular by motors electronically commutated, is generally necessarily limited, due to the sensitivity of the components of the integrated electronics to high temperature generated by the electric motor operating at full power. On the other hand, in the case when the limit of the temperature which is tolerable by the integrated electronics of the electric motor is reached or exceeded, then the risk increases that the integrated electronics malfunctions or breaks down. Additionally, the lifetime of the electronics for controlling the electric motor depends on the component temperatures reached by the electronics during operation of the motor; whereby elevated temperatures shorten the lifetime of the motor.

The invention aims to overcome at least partly the drawbacks due to overheating of the electronics of an electronically controlled electric motor.

US9531239 describes an electric motor comprising an housing for accommodating the motor electronics, a stator comprising a stator bushing and a laminated core having motor winding, an external rotor and an air conveying element connected with the rotor in a torque-proof manner. US9531239 describes that, during the electric motor operation, a flow of air is sucked axially by means of the air conveying element through cooling ribs provided in the plastic cover forming the upper outside wall of the electronics housing. In US9531239, the flow of air enters the electronics housing through the cooling ribs, then flows axially as guided by a lateral part of the cover of the electronics housing and exits the electric motor radially and outwardly by a circumferential aperture provided in the stator bushing.

The electric motor of US9531239 does enable an efficient cooling of the motor electronics accommodated in the electronics housing. Furthermore, the electric motor of US9531239 does not enable a cooling of the stator and rotor parts of the electric motor.

The invention aims to overcome these drawbacks.

The invention aims to provide with an electric motor comprising integrated motor electronics as a robust solution to overcome these drawbacks.

The invention aims to provide with different and even more efficient technical solutions for cooling integrated motor electronics and mechanical parts -that is to say the rotor and the stator- of an electric motor.

Particularly, the invention aims to provide with an electric motor with improved cooling performance for cooling the integrated motor electronics and the stator and rotor parts of the electric motor.

The invention aims to provide with an electric motor comprising integrated electronics with improved ventilation and cooling of the motor electronics and of the stator and rotor parts of the electric motor.

The invention also aims to provide with an electric motor comprising integrated motor electronics with improved cooling of the integrated electronics.

The invention also aims to provide with an electric motor comprising integrated motor electronics with increased lifetime of the integrated electronics and increased lifetime of the electric motor itself.

The invention also aims to provide with an electric motor comprising integrated electronics, the electric motor being capable to be used with increased power.

The invention aims to provide with an electric motor comprising integrated electronics, which can be assembled from a low number of components, and is then simple to manufacture for a reduced cost of manufacture.

The invention also aims to provide with an electric motor comprising integrated electronics that can be fabricated accurately.

The invention also aims to provide with an electric motor comprising integrated electronics that solves the problems encountered by the electric motor of US9532239.

The invention concerns an electric motor comprising:
- a rotor;
- a stator comprising a yoke, named stator yoke, accommodating the rotor mounted rotatable relative to the stator according to an axis of rotation of the rotor superposed to a longitudinal axis of the stator;
- an electronics housing mounted axially according to said longitudinal axis and supported by said stator yoke and secured to said stator yoke, the electronics housing containing integrated motor electronics to be cooled when the electric motor operates; characterized in that the electronics housing and said stator yoke are so disposed to form an air path for guiding an air flow through the air path and for cooling the integrated motor electronics and at least one part -the stator and/or the rotor- of the electric motor under operating the electric motor, the air path extending :
   ▪ axially between a free face, named yoke face, of said stator yoke and a free face, named housing face, of an axial bottom wall of the electronics housing facing said yoke face, and in contact with said yoke face and with said housing face, and ;
   ▪ radially between an opening of the air path, extending outwards, circumferentially and proximate to the axial bottom wall of the electronics housing, and limited inwards by an axial wall.

In the text:
- the terms "axial" and "axially" mean and design the longitudinal dimension of the electric motor by reference to the axis of rotation of the rotor, the axis of rotation of the rotor and the longitudinal dimension of the electric motor being superposed, and;
- the terms "radial" and radially" refer to the radial direction of a circle extending in a plane orthogonal to the axis of rotation of the rotor and having said axis of rotation as an axis of symmetry.

The inventors determined that, despite the poor velocity of the airflow flowing between the electric motor and the electronics housing, it is possible and advantageous to spare an air path extending axially between said stator yoke and the bottom wall of the electronics housing, so disposed to enable a debit of air to circulate radially through the air path. The air path is so configured to enable a debit of cold air (that is to say an atmospheric cold air at a temperature of for example in the order of 23°C) to enter peripherally into the air path and contact a free face, named housing face, of the axial bottom wall of the electronics housing warmed by the integrated motor electronics under operation of the electric motor, whereby a heat exchange occurs between the electronics housing -the electronics housing and the integrated motor electronics being cooled by heat exchange- and the debit of cold air -the debit of cold air being warmed (for example, to reach a temperature of about 28°C)-. The air path is also so configured to enable said debit of warm air to contact a free face, named yoke face, of said stator yoke, which is warmed by the mechanical parts, rotor and stator, of the electric motor under operation of said electric motor, whereby a heat exchange occurs between said yoke face and the debit of warmed air, the debit of warmed air being over warmed (for example, to reach a temperature of about 35°C) by the axial upper wall of said stator yoke and by the electric motor, and the electric motor being cooled due to said heat exchange.

The air path is also so disposed to enable the debit of over warmed air, warmed by contacting the bottom wall of the electronics housing and by contacting the axial upper wall of said stator yoke to exit the air path, thus resulting in the cooling of the integrated motor electronics and of the electric motor. The inventors discovered that due to the geometry of the electric motor and pressure heterogeneities around the electric motor and the electronics housing, operating the electric motor induces a debit of air in the air path, enabling the cooling of integrated motor electronics and the cooling of the mechanical part of the electric motor.

In some particular embodiments, advantageously and according to the invention, the electric motor comprises an air guide extending in the air path, radially relative to the longitudinal axis and interposed axially between the bottom wall of the electronics housing and said stator yoke, the air guide being so disposed in the air path to form:
- an air entrance path;
   o limited axially by at least one part of the axial bottom wall of the electronics housing at one axial end of the air entrance path and by the air guide at an opposite axial end of the air entrance path, and;
   o extending radially from a circumferential intake opening to a distal path limited radially and inwards by the axial wall, and;
- an air exit path;
   ∘ limited axially by the air guide at one axial end of the air exit path and by said yoke face at an opposite axial end of the air exit path, and;
   ∘ extending radially from the distal path and outwards to a sensibly circumferential output opening of the air path in communication with an outside space respective to the electric motor.

These embodiments apply to both AC (Alternative Current) and EC (Electronically Commutated) motors. These embodiments apply to electric motors with internal rotor and to electric motors with external rotor. The inventors discovered that due to the geometry and pressure distribution around the electric motor and the electronics housing according to this embodiment of the invention, operating the electric motor induces a flow of air in the air path, wherein a flow of cold air circulates in the air entrance path in contact with the bottom wall of the electronics housing whereby the flow of cold air is warmed and the integrated motor electronics is cooled, turning the distal path into the air exit path, whereby the flow of warmed air is over warmed by contacting the axial upper wall of said stator yoke and the electric motor is cooled, the over warmed airflow exiting the air exit path at the sensibly circumferential output opening of the air path.

The air entrance path is limited (axially):
- by at least one part of said housing face of the axial bottom wall of the electronics housing at a first axial end of the air entrance path, said housing face extending proximately to and facing the electronics housing, and;
- by the air guide at a second axial end of the air entrance path, the second axial end extending opposite to the first axial side in direction of said stator yoke.

Additionally, the air entrance path extends radially from a circumferential intake opening to a distal path limited radially and inwards by the cylindrical wall. The air path of the electric motor according to the invention enables a separation of the thermal loads of the integrated motor electronics and of the thermal loads of the electric motor. The air path is so configured to limit -notably to avoid- a transfer of heat from the mechanical parts (rotor and stator) of the electric motor to the integrated motor electronics.

The air exit path is limited axially, at a first axial side, named housing side, of the air exit path proximately to and facing the electronics housing, by the air guide.

In some particular embodiments, the air guide is a disk-shaped guide provided with a central hole, said disk-shaped guide extending substantially orthogonal to the longitudinal axis and forming:
- the air entrance path;
- the air exit path, and;
- the distal path providing with a passage of air between the air entrance path and the air exit path.

In these particular embodiments, the disk-shaped guide is equipped with spacers adapted to hold the air guide in the air space and to form the air entrance path, the distal path and the air exit path.

In some particular embodiments, advantageously and according to the invention, the air path is limited inwards by an axial cylinder-shaped wall -notably a revolution cylinder-shaped wall- of the rotor. However, nothing prevents the axial cylinder-shaped wall from being an axial cylinder-shaped wall -notably a revolution cylinder-shaped wall- of the stator.

In some particular embodiments, advantageously and according to the invention, the electric motor comprises an air conveyor so arranged to be rotatably linked to the rotor. In these particular embodiments, the air conveyor enables a decrease of the air pressure on one principal face of the air conveyor and an increase of the air pressure on the other principal face of the air conveyor, creating a debit of air flowing from the circumferential intake opening to the sensibly circumferential output opening, through the distal space.

In some particular embodiments, advantageously and according to the invention, the air conveyor is so disposed to produce a debit of air entering the air path through the circumferential intake opening and exiting the air path through the sensibly circumferential output opening.

In some particular embodiments, advantageously and according to the invention, the air conveyor comprises an impeller presenting blades, extending principally proximately to the circumferential output opening. In these particular embodiments, the air conveyor enables a decrease of the air pressure on one principal face of the fins of the impeller and in the surrounding of the sensibly circumferential output opening. The decrease of air pressure provides with a sucking of air and a circulation of air from the circumferential intake opening to the sensibly circumferential output opening, through the distal space.

However, nothing prevents, in other particular embodiments, the air conveyor from being disposed proximately to the circumferential intake opening. According to these particular embodiments, the air conveyor comprises an impeller presenting blades disposed proximately to the circumferential intake opening. In these particular embodiments, the air conveyor enables an increase of the air pressure on one principal face of the fins of the impeller and in the surrounding of the sensibly circumferential intake opening. The increase of air pressure provides with a pushing effect of air and a circulation of air from the circumferential intake opening to the sensibly circumferential output opening, through the distal space.

Nothing prevents, in other particular embodiments, the air conveyor from being disposed so that the blades extend outwardly respectively to the rotor.

In some particular embodiments, the air conveyor comprises an impeller disposed rotatably in the air exit path.

Nothing prevents however that in some other embodiments, the air conveyor comprises an impeller disposed rotatably in the air entrance path.

In some embodiments of an electric motor according to the invention, the rotor is an external rotor, comprising a sleeve of a plurality of permanent magnets.

Nothing prevents however that in some other embodiments, the rotor is an internal rotor, formed of at least one permanent magnet integrated in the axial shaft.

The invention extends to a vehicle comprising an electric motor according to the invention.

The invention further relates to an electric motor and to a vehicle comprising the same that are characterised, in combination or separately, by all or some of the features specified above or hereafter. Irrespective of the formal presentation that is provided, unless explicitly stated otherwise, the various features specified above or hereafter must not be considered to be closely or inextricably linked to each other, the invention can relate to only one of these structural or functional features, or to only some of these structural or functional features, or to only part of one of these structural or functional features, or even to any group, combination or juxtaposition of all or some of these structural or functional features.

Further aims, features and advantages of the invention will become apparent upon reading the following description, which is provided by way of a non-limiting example of some of its possible embodiments, and with reference to the accompanying drawings, in which:
- figure 1 is a longitudinal sectional view of a detail of an electric motor with external rotor and electronics housing, provided with a cooling air path according to a first embodiment conform to the invention;
- figure 2 is a simplified longitudinal sectional view of an electric motor with external rotor and electronics housing, provided with a cooling air path according to the first embodiment conform to the invention;
- figure 3 is a longitudinal sectional view of a detail of an electric motor with external rotor and electronics housing, provided with a cooling air path according to a second embodiment conform to the invention;
- figure 4 is a simplified longitudinal sectional view of an electric motor with external rotor and electronics housing, provided with a cooling air path according to the second embodiment conform to the invention;
- figure 5 is a general perspective view of a fan wheel designed to be incorporated in an electric motor according to the second embodiment conform to the invention;
- figure 6 is a schematic representation of an electric motor provided with an external rotor according to the first embodiment conform to the invention;
- figure 7 represents a schematic representation of an electric motor provided with an external rotor according to the second embodiment conform to the invention;
- figure 8 represents a schematic representation of an electric motor provided with an internal rotor according to a third embodiment conform to the invention;
- figure 9 represents a schematic representation of an electric motor provided with an internal rotor according to a fourth embodiment conform to the invention, and;
- figure 10 represents an exploded view of an electric motor provided with an external rotor and a cooling air path according to the second embodiment conform to the invention.

The aim of the invention is to provide with a simple, cheap and robust solution to prevent from over-heating, the integrated electronics contained in an electronics housing of an electric motor.

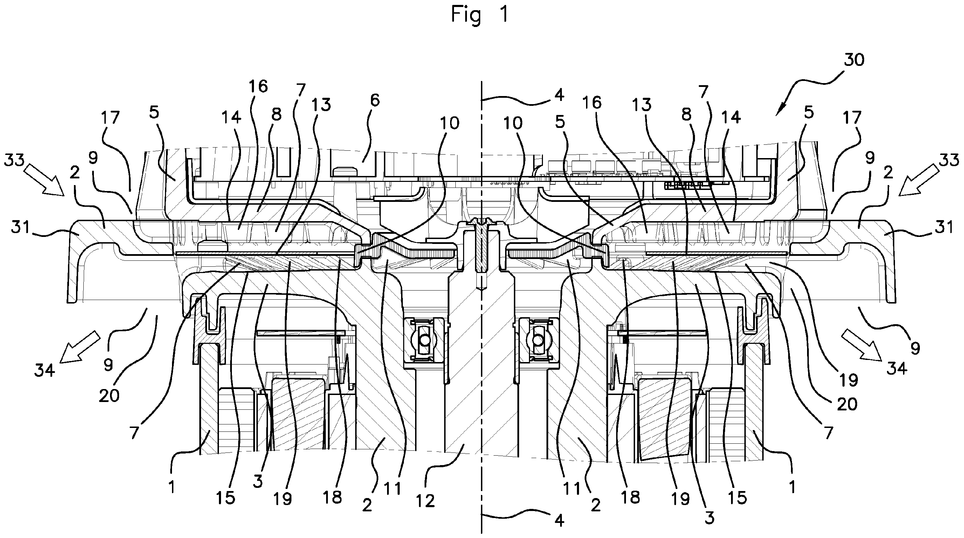

An electric motor 30 according to a first embodiment of the invention represented figure 1 comprises an external rotor 1 comprising an axial shaft 12 and a sleeve provided with a plurality of permanent magnets. It also comprises an internal stator 2,3,31 comprising coils, and a yoke, named stator yoke 3, accommodating the external rotor 1. The external rotor 1 is mounted rotatable according to the axis of rotation superposed to a longitudinal axis 4 of the shaft 12 of the external rotor 1. The electric motor 30 further comprises an electronics housing 5 mounted axially according to said longitudinal axis 4 and axially screwed to said stator yoke 3. The electronics housing 5 contains integrated motor electronics 6. The electronics housing 5 presents a bottom wall 8 forming the axial bottom end of the electronics housing 5. The bottom wall 8 of the electronics housing 5 presents an axial face, named housing face 14, delimiting axially a radial air path 7 formed between the electronics housing 5 and said stator yoke 3. Said stator yoke 3 presents an axial face, named yoke face 15, also delimiting axially the radial air path 7. The bottom wall 8 of the electronics housing 5 and said stator yoke 3 are so disposed to form the air path 7 for cooling the integrated motor electronics 6 included in the electronics housing 5 and said stator yoke 3 covering the stator 2,3 and the rotor 1 of the electric motor 30, when the electric motor 30 operates. The air path 7 extends axially between said yoke face 15 of said stator yoke 3 and said housing face 14 of the bottom wall 8 of the electronics housing 5. The air path 7 extends radially outwardly until an opening 9 formed circumferentially between said stator yoke 3 of the stator 2 and the electronics housing 5, and radially inwardly until an axial -notably a cylindrical-shaped axial- wall 10, separating the air path 7 from a central cavity 11 of the stator 2. The opening 9 of the air path 7 thus extends proximately of the axial bottom wall 8 of the electronics housing 5. The air path 7 extends radially and inwardly until the axial wall 10 delimiting a central cavity 11 of the stator 2 in which the shaft 12 of the external rotor 1 is disposed. In certain embodiments according to the invention, the axial wall 10 can be a part of a central element screwed in solidarity with the shaft 12. In certain embodiments according to the invention, the axial wall 10 is cylindrically-shaped, notably cylindrical of revolution. However, nothing prevents the axial wall 10 from being differently shaped. The axial wall 10 can be elliptically-shaped or polygonal-shaped. Nothing prevents the axial wall 10 from implementing radial ribs.

In the embodiment represented figure 1, the air path 7 comprises an air guide 13 extending radially and sensibly symmetrically relatively to the longitudinal axis 4 of the stator 2 and is interposed axially between the bottom wall 8 of the electronics housing 5 and the axial end of said stator yoke 3, the air guide 13 being so disposed in the air path 7 to form:
- an air entrance path 16 limited axially by at least one part of the axial bottom wall 8 of the electronics housing 5 and by the air guide 13, and extending radially from a circumferential intake opening 17 to a distal path 18 limited radially and inwardly by the cylindrical axial wall 10, by the bottom wall 8 of the electronics housing 5, and by said stator yoke 3, and ;
- an air exit path 19 limited axially at one side by the air guide 13 and at the opposite side by said stator yoke 3, said air exit path 19 extending radially from the distal path 18 to a sensibly circumferential output 20 of the air exit path 19, in communication with an outside space 21 of the electric motor 30.

The electric motor 30 according to this first embodiment conform to the invention enables a debit of external air 33 to flow through the air path 7, from the circumferential intake opening 17 to the circumferential output 20. The external air entering the air entrance path 16 contacts and exchanges heat with said housing face 14 of the bottom wall 8 of the electronics housing 5 and cools the electronics housing 5 and integrated motor electronics 6. The debit of external air warmed by contacting said housing face 14 of the bottom wall 8 enters the air exit path 19, contacts and exchange heat with said yoke face 15 of said stator yoke 3 and with the rotor part and/or the stator part of the electric motor, therefore being over warmed and then exits the air exit path 19 and the air path 7 through the circumferential output 20 to the outer space of the electric motor 30. The debit of cold air entering the air entrance path 16 of the air path 7 is identified by an arrow 33 in figures 1, 2, 3, 4, 6, 7, 8, 9 and 10. The debit of external air over warmed by the rotor and/or stator parts of the electric motor is identified by an arrow 34 in figures 1, 2, 3, 4, 6, 7, 8, 9 and 10.

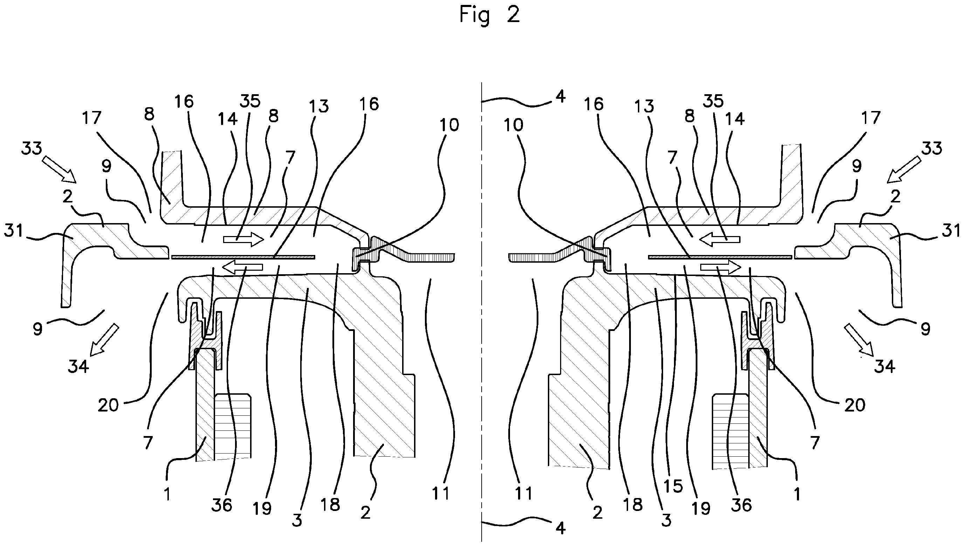

A simplified view of the air path 7 of an electric motor 30 of figure 1 is presented in figure 2. Due to the rotation of the external rotor 1 when the electric motor operates, a decrease of the atmospheric pressure is triggered in the region of the circumferential output 20, leading to a debit of air 36 propagating in the air exit path 19 and to a subsequent debit of air 35 propagating in the air entrance path 16. The bottom wall 8 of the electronics housing 5 containing integrated motor electronics 6 in then cooled in a simple and efficient manner without modifying significantly the overall structure of the electric motor.

In some particular and non-represented embodiments according to the invention, nothing prevents the air path 7 from being free of air guide 13. The air path 7 extends axially between a longitudinal end of said stator yoke 3 and the axial bottom wall 8 of the electronics housing 5. The air path 7 extends radially and outwardly between an opening 9 formed circumferentially between said stator yoke 3 of the stator 2 and the electronics housing 5, and radially and inwardly until the cylindrical axial wall 10. The air path 7 enables a debit of external air 33 to circulate in the air path 7, to contact and exchange heat with the axial bottom wall 8 of the electronics housing 5 and therefore cools the electronics housing 5 and the integrated motor electronics 6. The inventor deems that due to the geometry of the electric motor, operating the electric motor 30 creates some pressure heterogeneities around the electric motor 30 and around the electronics housing 5 and therefore generates a debit of external air in the air path 7, enabling the cooling of the electronics housing 5 and of the integrated electronics 6.

In the different embodiments, the stator 2 of the electric motor 30 forms a circumferential flange 31 extending axially between said stator yoke 3 and the electronics housing 5 and radially circumferentially in periphery of the electric motor 30. The circumferential flange 31 forms a separation in the opening 9 of the air path 7, then providing with a circumferential intake opening 17 and with a circumferential output 20. In the different embodiments, the electronic housing 5 is screwed to the circumferential flange 31 of the stator 2, in such a manner to provide with the air path 7 extending between the stator 2 and the electronics housing 5.

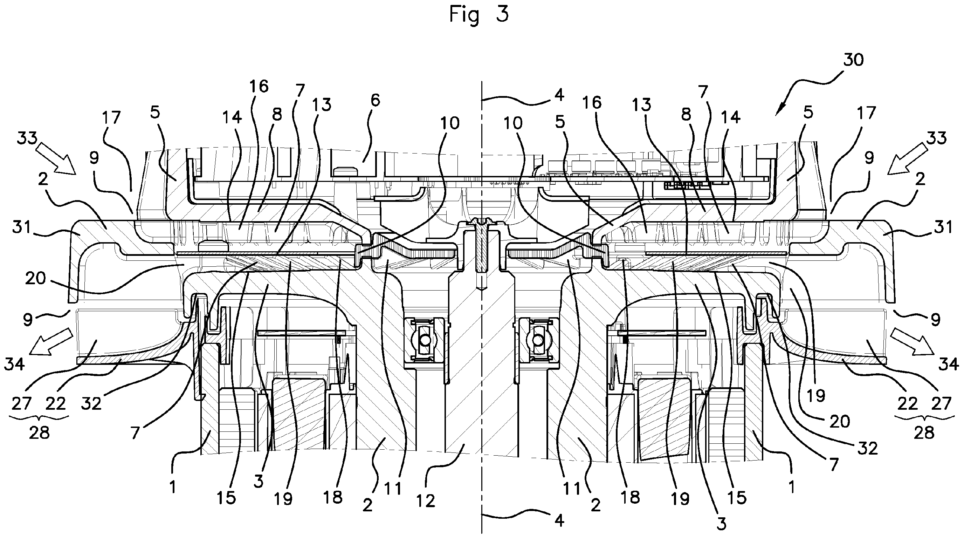

An electric motor 30 according to a second embodiment of the invention is represented figure 3. The electric motor 30 of figure 3 is similar to the electric motor 30 of figure 1 and further presents an additional fan wheel 22 so mounted rotatable according to the longitudinal axis 4 of the electric motor 30 that it is rotated by the external rotor 1 of the electric motor 30. The fan wheel 22 is guided in rotation by a circumferential groove 32 formed in said stator yoke 3. The fan wheel 22 comprises a plurality of blades 27. The blades 27 of the plurality of blades are so disposed to enhance the debit of air in the air exit path 19 and consequently in the distal path 18 and in the air entrance path 16. The blades 27 are so disposed to increase the debit of external air entering the circumferential intake opening 17. Thus, the cooling of the electronics housing 5 is improved.

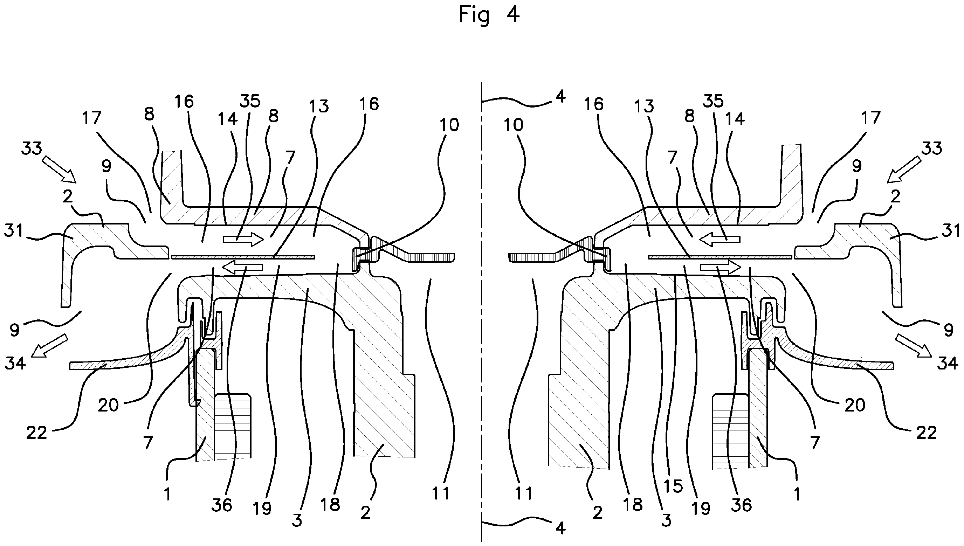

A simplified view of the air path 7 of an electric motor 30 of figure 3 is presented in figure 4. In figure 4, the debit of air propagating in the air entrance path 16 is represented by the arrow 35 and the debit of warmed air propagating in the air exit path 19 is represented by the arrow 36.

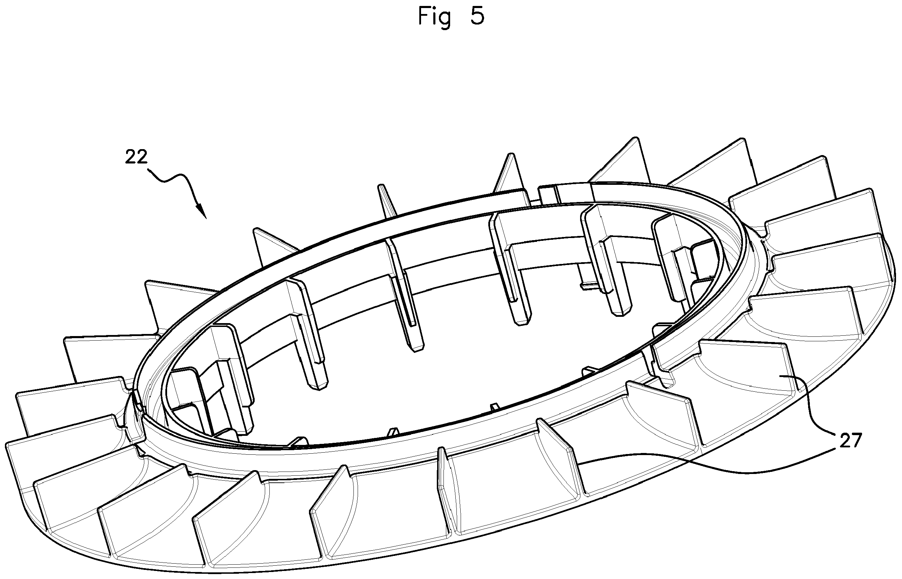

An embodiment of the fan wheel 22 is also represented in a perspective view in figure 5.

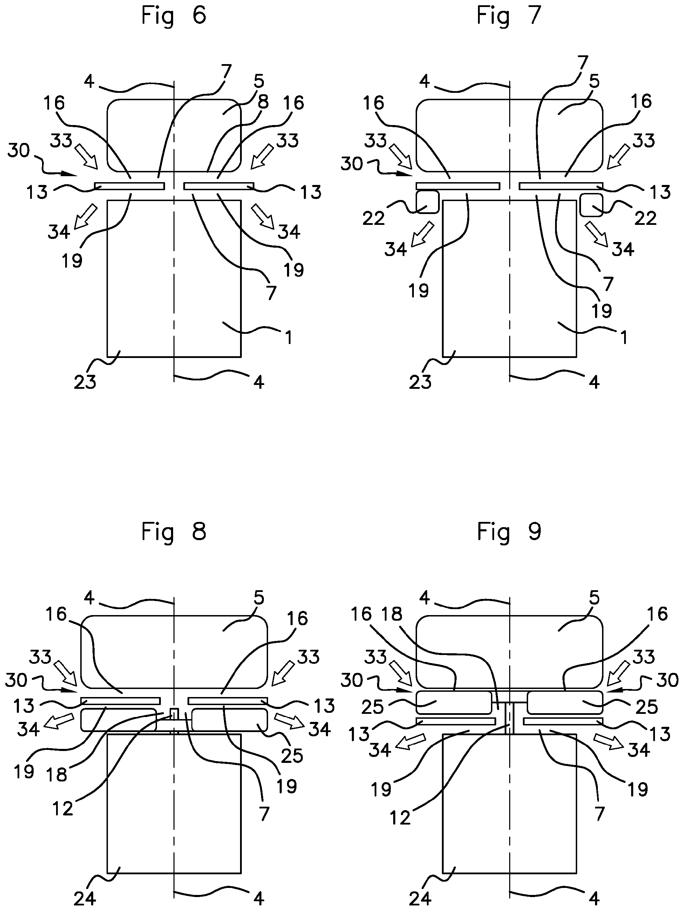

The electric motor 30 according to a particular embodiment of the invention represented schematically in figure 6 comprises an external rotor 23, mounted rotatably according to the longitudinal axis 4 of the electric motor 30 and an electronics housing 5. An air guide 13 is interposed axially between said external rotor 23 and the electronics housing 5 in such a manner that a debit of external air is formed in the air path 7. The air guide 13 delimitates the air entrance path 16 and the air exit path 19 in the air path 7, the air entrance path 16 and the air exit path 19 communicating by a distal path. The air guide 13 enables the external air flowing through the air entrance path 16 contacting first said housing face of the axial bottom wall 8 of the electronics housing inwardly and then flowing outwardly through the air exit path 19 where the debit of air is warmed by contacting said yoke face of said stator yoke.

However, nothing prevents that in another embodiment of an electric motor according to the invention represented schematically in figure 7, the electric motor 30 comprise an additional fan wheel 22 coupled rotatably with the external rotor 23 and providing with a sucking effect generating a debit of external air in the air entrance path 16 of the air path 7 16 wherein the debit of external air cools said housing face of the bottom wall of the electronics housing 5, and further through the distal path and through the air exit path 19 where the debit of air is over warmed by contacting said yoke face of said stator yoke.

In another embodiment of an electric motor with an internal rotor 24 according to the invention represented schematically in figure 8, a fan wheel 25 is so disposed in the air exit path 19 of the air path 7, increasing the debit of air in the entrance path 16 of the electric motor 30 and improving the cooling of the integrated motor electronics 6 accommodated in the electronics housing 5 and the cooling of the rotor 1 and stator 2 of the electric motor 30. The fan wheel 25 is rotatably coupled with the shaft 12 of the rotor 24.

Nothing prevents, in another embodiment of an electric motor 30 with an internal rotor 24 according to the invention represented schematically figure 9, from disposing a fan wheel 25 in the entrance path 16 of the air path 7 to increase the debit of air in the entrance path 16 of the electric motor 30 and to improve the cooling effect of the debit of air on the electronics housing 5 (and on the integrated motor electronics 6 accommodated in the electronics housing 5) and the cooling effect of the rotor 1 and stator 2 of the electric motor 30.

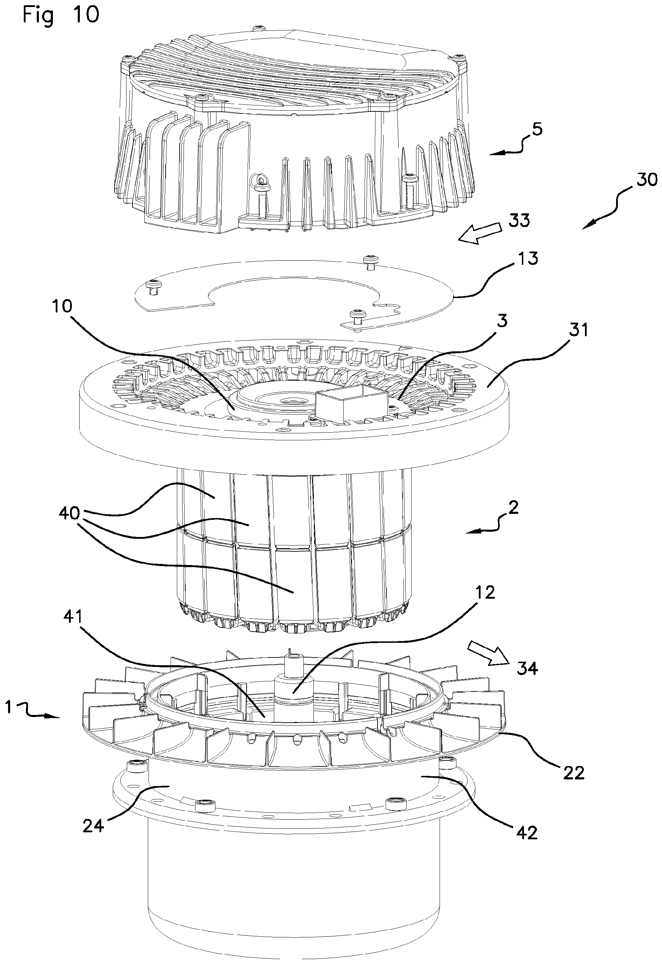

An exploded view of an electric motor 30 presenting an air path 7 according to the second embodiment of the invention is represented figure 10. The electric motor represented in figure 10 corresponds to the electric motor 30 represented in figures 3 and 4. The electric motor 30 represented in figure 10 comprises an internal stator 2 provided with coils 40, with a yoke, named stator yoke 3, and with a circumferential flange 31 extending at one axial end of said stator yoke 3 of the internal stator 2. The circumferential flange 31 is designed to secure the electronics housing 5 to said stator yoke 3. The internal stator 2 and the external rotor 1 cooperate to operate the electric motor 30. The electric motor represented in figure 10 comprises an air guide 13 designed to be interposed axially between the bottom wall 8 of the electronics housing 5 and the axial end of said stator yoke 3. The air guide 13 delimits an air entrance path limited axially by the axial bottom wall of the electronics housing 5 and by the air guide 13 and enabling a debit of external air 33 to flow through the air entrance path and to cool the electronics housing 5. The air guide 13 also delimits an air exit path limited axially at one side by the air guide 13 and at the opposite side by said stator yoke 3, therefore enabling a debit of air 34, namely a debit of air over warmed by the rotor and/or stator parts of the electric motor 30, to exit the air path, thus resulting in the cooling of the integrated motor electronics and of the electric motor 30 itself.

The electric motor represented in figure 10 comprises a fan wheel 22 so mounted rotatable according to the longitudinal axis of the electric motor 30. The fan wheel 22 is rotated by the external rotor 1 of the electric motor 30 and is guided in rotation by a circumferential groove (not shown in figure 10) of said stator yoke 3. The fan wheel 22 comprises a plurality of blades so disposed to enhance the debit of air in the air path and to improve the cooling of the electronics housing 5 of the electric motor 30.

The invention can be the subject of numerous variations and applications other than those described above. In particular, it is obvious that, unless otherwise specified, the various structural and functional features of each of the aforementioned embodiments must not be considered to be combined and/or closely and/or inextricably linked to one another, but, on the contrary, must be considered to be simple juxtapositions. Furthermore, the structural and/or functional features of the various embodiments described above can be the subject, in whole or in part, of any different juxtaposition or of any different combination.

## Claims

1. Electric motor (30) comprising:
- a rotor (1) ;
- a stator (2,3,31) comprising a yoke, named stator yoke (3), accommodating the rotor (1) mounted rotatable relative to the stator (2) according to an axis of rotation of the rotor (1) superposed to a longitudinal axis (4) of the stator (2,3,31) ;
- an electronics housing (5) mounted axially according to said longitudinal axis (4) and supported by said stator yoke (3) and secured to said stator yoke (3), the electronics housing (5) containing integrated motor electronics (6) to be cooled when the electric motor (30) operates;
**characterized in that** the electronics housing (5) and said stator yoke (3) are so disposed to form an air path (7) for guiding an air flow (35,36) through the air path (7) and for cooling the integrated motor electronics (6) under operating the electric motor (30), the air path (7) extending :
▪ axially between a free face, named yoke face (15), of said stator yoke (3) and a free face, named housing face (14), of an axial bottom wall (8) of the electronics housing (5) facing said yoke face (15), and in contact with said yoke face (15) and with said housing face (14), and ;
▪ radially between an opening (9) of the air path (7), extending outwards, circumferentially and proximate to the axial bottom wall (8) of the electronics housing (5), and limited inwards by an axial wall (10).

2. Electric motor according to claim 1, **characterized in that** it comprises an air guide (13) extending in the air path (6), radially relative to the longitudinal axis (4) and interposed axially between the bottom wall (8) of the electronics housing (5) and said stator yoke (3), the air guide (13) being so disposed in the air path (6) to form :
- an air entrance path (16);
o limited axially by at least one part of the axial bottom wall (8) of the electronics housing (5) at one axial end of the air entrance path (16) and by the air guide (13) at an opposite axial end of the air entrance path (16), and;
o extending radially from a circumferential intake opening (17) to a distal path (18) limited radially and inwards by the axial wall (10), and;
- an air exit path (19);
o limited axially by the air guide (13) at one axial end of the air exit path (19) and by said yoke face (15) at an opposite axial end of the air exit path (19), and;
o extending radially from the distal path (18) and outwards to a sensibly circumferential output (20) of the air path (7) in communication with an outside space (21) respective to the electric motor (30).

3. Electric motor according to one of claims 1 or 2, **characterized in that** it comprises an air conveyor (26) so arranged to be rotatably linked to the rotor (1).

4. Electric motor according to claim 3, **characterized in that** the air conveyor (26) is so disposed to produce a debit of air entering the air path (7) through the circumferential intake opening (17) and exiting the air path (7) through the sensibly circumferential output (20).

5. Electric motor according to claim 4, **characterized in that** the air conveyor (26) comprises an impeller (22) presenting blades (27) extending principally proximately to the circumferential output (20).

6. Electric motor according to claim 4, **characterized in that** the air conveyor (26) comprises an impeller (28) presenting blades (29) disposed proximately to the circumferential intake opening (17).

7. Electric motor according to claims 5 or 6, **characterized in that** the blades (22) extend outwardly respectively to the rotor (1).

8. Electric motor according to claim 4, **characterized in that** the air conveyor comprises an impeller (25,28) disposed rotatably in the air exit path (19).

9. Electric motor according to claim 4, **characterized in that** the air conveyor comprises an impeller (25,28) disposed rotatably in the air entrance path (16).

10. Electric motor according to one of claims claim 1 to 9, **characterized in that** the rotor (1) is an external rotor (23).

11. Electric motor according to claims 1 to 9, **characterized in that** the rotor (1) is an internal rotor (24).
